# EUROPEAN PATENT APPLICATION

(11) **EP 1 493 993 A1**
(43) Date of publication of application: **05.01.2005**
(21) Application number: 03014854.8
(22) Date of filing: 30.06.2003
(51) Int. Cl.: G01C 21/36, B60R 16/02, G10L 15/26, G10L 15/22

(54) **Method and device for controlling a speech dialog system**

(71) Applicant: Harman Becker Automotive Systems GmbH, 76307 Karlsbad (DE)
(72) Inventor: König, Lars, 89075 Ulm (DE)
(74) Representative: Grünecker, Kinkeldey, Stockmair & Schwanhäusser Anwaltssozietät

(57) **Abstract**

The invention is directed to a method for controlling a speech dialog system comprising the steps of receiving an input signal emanating from a device not being part of the speech dialog system, automatically classifying the input signal according to a predetermined criterion, initiating outputting and output speech signal by the speech dialog system depending on the classification of the input signal.

## Description

The invention is directed to a method for controlling a speech dialog system and to a device for controlling a speech dialog system.

In many fields and applications, speech dialog systems are used to provide a comfortable and natural interaction between a human user and a machine. Depending on the device the user wants to interact with, a speech dialog system can be used to enable the user to get information, order something or controlling the device in some other ways. For example, the speech dialog system can be employed in a car to allow the user controlling different devices such as a mobile phone, car radio, navigation system and/or air conditioning system.

In order to initiate a dialog, a user has to press a so-called push-to-talk key which is part of the speech dialog system, thus, activating the speech dialog system. In a vehicular environment, such a push-to-talk key usually is located at the steering wheel. The activated speech dialog system is enabled to receive speech signals from the user. Thus, the user can say a command which will be processed by the speech dialog system. In particular, the speech dialog system receives the signal and processes the utterance with the aid of a speech recognizer. In some cases, a voice activity detector may precede the speech recognizer so as to perform a kind of pre-processing of the input signal to determine whether the signal actually comprises any voice activity and not only background noise.

There are different types of speech recognizers that can be used in such an environment. For example, the speech recognizer can be an isolated word recognizer or a compound word recognizer. In the case of the first one, the user has to separate subsequent words by sufficiently long pauses such that the system can determine the beginning and the end of the word. In the case of the latter, on the other hand, the beginning and end of words are detected by the compound word recognizer itself which allows the user to speak in a more natural way. Speech recognition algorithms can be based on different methods such as template matching, Hidden Markov Models and/or artificial neural networks.

After having recognized a command, the speech dialog system can respond to the user or directly initiate any action depending on the command.

As an example, the user can press the push-to-talk key and speak the command "Telephone call". If this command is recognized by the speech dialog system, the system might answer "Which number would you like to dial?" or "Which person would you like to call?". Then, either the user tells the system a phone number or the name, the phone number of which is stored in a phonebook available to the speech dialog system. Thus, having determined all necessary parameters by way of a dialog, the system performs a corresponding action, namely dialing a specific telephone number.

However, it is a drawback of these prior art speech dialog systems that a speech dialog system is only started on the user's initiative. In particular, the user has to press a push-to-talk key or a similar button. In some cases, however, it would be useful and increase the user-friendliness if the speech dialog system is activated independently of the user. Therefore, it is the problem underlying the invention to provide a method and a device for controlling a speech dialog system in order to increase comfort and user-friendliness.

This problem is solved by a method for controlling a speech dialog system according to claim 1 and a device for controlling a speech dialog system according to claim 11.

Accordingly, a method for controlling a speech dialog system is provided comprising the steps of:
receiving an input signal emanating from a device not being part of the speech dialog system,
automatically classifying the input signal according to a predetermined criterion, automatically initiating outputting an output speech signal by the speech dialog system depending on the classification of the input signal.

Thus, according to this method, the output of a speech signal by the speech dialog system is initiated independently of an input of the user. In particular, a user does not have to press a push-to-talk key (which is part of the speech dialog system) in order to enter into a dialog with the speech dialog system. Furthermore, as the input signal is classified and the output speech signal depends on this classification, the response or information presented to the user is very relevant. Furthermore, the use and operation of the devices not being part of the speech dialog system by the user is simplified. In addition, according to this method, a speech dialog system is enabled to react on an event (initiating a signal to emanate from the device) occurring in an additional device not being part of the speech dialog system and to provide the user with corresponding information.

According to a preferred embodiment, the speech dialog system can be inactive when the input signal is received and the initiating step comprises activating the speech dialog system.

Thus, although the speech dialog system may be inactive, an activation independent of the user is possible. In this way, unexpected events occurring in a device not being part of the speech dialog system can be announced to a user.

According to a preferred embodiment of the above-described methods, the receiving step can comprise receiving an input signal emanating from one of at least two devices not being part of the speech dialog system. In this way, in particular, a highly user-friendly method for controlling a speech dialog system in a multimedia environment is provided.

Advantageously, the method can comprise the steps of:
receiving a speech input signal,
processing the speech input signal by a speech recognition unit,
triggering a device not being part of the speech dialog system or outputting an output speech signal by the speech dialog system depending on the processed speech input signal.

Hence, there is a dialog between the user and the system. In particular, in response to the output speech signal of the speech dialog system, a user may say a command that is received as speech input signal. This input signal is processed by the speech dialog system, particularly, by a speech recognition unit and a corresponding action is performed. If the speech dialog system requires further information, for example, an output speech signal can be output by the speech dialog system. However, the input speech signal of the user may contain sufficient information so as to allow the speech dialog system to directly trigger a device not being part of the speech dialog system, preferably the device from which the input signal emanated.

According to a preferred embodiment, the classifying step can comprise classifying according to the device the input signal emanated from and/or according to the priority of the input signal.

Thus, the method allows to initiate outputting an output speech signal depending on the device the input signal emanated from and/or according to the priority of the input signal. Input signals can have assigned different priorities indicating their importance. For example, an E-mail being received by an E-mail browser (which can be one of the devices) can be marked as being of high importance. Thus, the received input signal emanated from the E-mail browser will be classified with high priority. Alternatively or additionally, an input signal can inherently have a high priority, for example, based on the type of device it emanated. As an example, input signal being received from a navigation system can always be considered as having a high priority. A corresponding criterion can be entered by a user.

Preferably, the initiating step can be preceded by deciding according to a further predetermined criterion at what time outputting the output speech signal is to be initiated. In particular, under some circumstances, outputting the output speech signal would disturb a user in an undesirable way. For instance, a user might call somebody. In this case, he does not want to be disturbed by an output speech signal indicating that a new E-mail has arrived. Thus, a corresponding criterion would be that during a telephone call, no output speech signals are to be output.

Advantageously, the deciding step can comprise deciding that the output speech signal is to be output immediately if the input signal was classified according to a priority above a predetermined threshold.

There can be input signals (due to very important situations or events), a user has to be informed on immediately. Such a case is present if the input signal has been classified according to its priority and this priority is above a predetermined threshold.

According to an advantageous embodiment, the predetermined criterion for the classifying step and/or the further predetermined criterion for the deciding step can be modified by a user. This is particularly useful if a user has situations in which he wishes a specific classification and/or decision criterion in order to be informed on specific events immediately after a predetermined time, or if a specific condition (such as "no telephone call") is fulfilled. Advantageously, different scenarios can be stored in the speech dialog system comprising different predetermined criteria. Depending on the circumstances, a user, then, can choose which scenario matches the circumstances best.

According to a preferred embodiment, the deciding step can comprise deciding for which output speech signal, output is to be initiated first if two input signals are received within a predetermined time interval.

In this way, cases are dealt with in which, for example, a phone call and an important E-mail arrive at the same or almost the same time. The decision on which output speech signal is to be output first can be based on the device classification (whether the input signal stems from the mobile phone or the E-mail browser) and/or on the priority classification, for example.

Preferably, in the above-described methods, the device not being part of the navigation system can be a mobile phone, an Internet browser, a car radio, an E-mail browser and/or a navigation system.

In this way, the method provides a highly advantageous controlling of a speech dialog system in a multimedia environment.

The invention further provides a computer program product directly loadable into an internal memory of a digital computer comprising software code portions for performing the steps of the previously described methods.

Furthermore, a computer program product stored on a medium readable by a computer system is provided comprising computer readable program means for causing a computer to perform the steps of the above-described methods.

In addition, the invention provides a device for controlling a speech dialog system, in particular, according to one of the previously described methods, comprising:
input means for receiving an input signal emanating from device not being part of the speech dialog system,
classifying means for automatically classifying the input signal according to a predetermined criterion,
initiating means for automatically initiating outputting an output speech signal by the speech dialog system depending on the classification of the input signal.

Such a device enhances the user-friendliness of a speech dialog system as under specific circumstances, namely if a device emanates an input signal to be received the input means, outputting of an output speech signal is initiated. Since the output of each signal depends on the specification of the input signal, highly relevant information is provided to a user.

Preferably, the device can be integrated into a speech dialog system. Alternatively, it can also be arranged separately from the speech dialog system to which it is then connected.

Advantageously, the classifying means can comprise a memory for storing data for the predetermined criterion. In particular, the input signal, thus, can be compared to stored data (such as threshold values, for example) in order to enable a classification.

According to a preferred embodiment, the initiating means can be configured to activate the speech dialog system if the speech dialog system is inactive. Particularly in the case of an inactive speech dialog system, the device allows providing information on unexpected events occurring in a device to a user.

According to a preferred embodiment of the above-described device, the input means can be configured to receive an input signal emanating from one of at least two devices not being part of the speech dialog system.

Preferably, the device can further comprise deciding means to decide according to a further predetermined criterion at what time outputting the output speech signal is to be initiated. In this way, information on specific situations and circumstances can be taken into account.

According to a further embodiment, the device can be configured to be activated and/or deactivated via a speech command.

In this way, especially in situations where a user does not want to be disturbed by a speech output of the system, he can deactivate in a simple way by saying a corresponding deactivation command.

Preferably, the device can be connected to a speech recognition unit of the speech dialog system. Thus, in order to enable activation and/or deactivation via speech command, the device can rely on the corresponding speech recognition unit of the already present speech dialog system.

According to a preferred embodiment of the previously described devices, the input means can be configured to receive an input signal from a mobile phone, and Internet browser, a car radio, an E-mail browser and/or a navigation system. This allows a simple and comfortable controlling of different devices in a multimedia environment, for example.

The invention further provides a vehicle comprising one of the previously described devices. Particularly in a vehicular environment (such as in a car or on a motorbike, for example) such a device is very useful since a user (for example, the driver) usually is not able to constantly consider new messages appearing on a display. Thus, a speech output providing necessary information on an event occurring in one device is very helpful.

Preferably, the vehicle can further comprise a device, preferably at least two devices, not being part of the speech dialog system, the device/devices being configured to provide an input signal for the device controlling the speech dialog system if the device not being part of the speech dialog system receives an external trigger signal. Such a trigger signal can be an incoming call, and incoming E-mail, or incoming traffic information, for example.

Further features and advantages of the invention will be described with reference to the examples and the figures.
- Fig. 1: illustrates schematically the arrangement of a system comprising a speech dialog system and a speech dialog system control unit;
- Fig. 2: is a flow diagram illustrating a speech dialog as performed by a speech dialog system;
- Fig. 3: illustrates the structure of a control unit for a speech dialog system; and
- Fig. 4: is a flow diagram illustrating an example of controlling a speech dialog system.

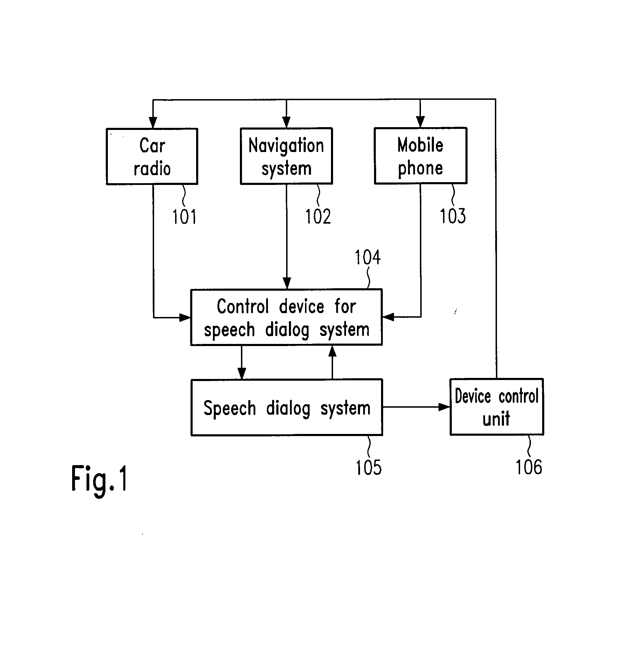

The interplay between a control device for a speech dialog system and a corresponding speech dialog system is illustrated in Fig. 1. An arrangement as shown in this figure can be provided in a vehicular environment, for example.

In the illustrated example, three devices being part of the speech dialog system are present. These devices are a car radio 101, a navigation system 102 and a mobile phone 103. Each of these devices is configured to receive an input from an external source. If such an input is received by a device, this can trigger an event or a modification of the state of the device. For example, the mobile phone 103 may receive a signal indicating that a call is coming in. In the case of the car radio 101, the device may receive traffic information. This may also happen in the case of a navigation system 102 that also receives traffic information, for example, via TMC (traffic message channel). The receipt of such an input from an external source is an occurring event. Usually, the devices are configured so as to process such an event in an appropriate way. For example, the receipt of an incoming call may result in an acoustical output by the mobile phone in order to inform a user.

It is to be noted that in this and other environments, additional and/or other devices may be present. For example, also in a vehicular environment, one of the devices could be a control unit for the windscreen wipers. This control unit can be configured so as to receive data from a rain detector.

The car radio 101, the navigation system 102 and the mobile phone 103 are connected to a device 104 for controlling a speech dialog system. Upon receipt of an external input, triggering the occurrence of an event in the device, the device outputs a signal that is fed to the control device 104. In its simplest form, such an input signal only serves to indicate that an event has occurred but without further specification. However, preferably, the input signal comprises additional information and parameters characterizing the events in more detail.

The control device 104 is configured to process these input in an appropriate way. In particular, it comprises an input for receiving input signals and a processing unit for processing of the signals. It further comprises an input and output for interacting with the speech dialog system 105. The speech dialog system 105 is configured to enter into a dialog with the user, thus, providing a speech based man-machine interface (MMI).

The speech dialog system comprises different parts or units to enable the above-described functionality. In particular, it comprises an input unit being responsible for receiving speech input of a user. Such an input unit comprises one or several microphones and, possibly, signal processing means in order to enhance the received signal. For example, the signal processing means can comprise filters enabling acoustic echo cancellation, noise reduction and/or feedback suppression. In particular, the input unit can comprise a microphone array and a corresponding beamformer (e.g., a delay-and-sum beamformer) for combining the signals emanating from the microphone array.

Furthermore, the speech dialog system also comprises an output unit with a loudspeaker to output speech signals to a user.

An essential part of a speech dialog system is a speech recognition unit. Such a speech recognition unit can be configured in different ways. For example, it can be an isolated word recognizer or a compound word recognizer. Furthermore, the corresponding speech recognition algorithms can be based on template matching, Hidden Markov Models (HMM) and/or artificial neural networks. Received utterances are processed by the speech recognition means in order to determine words, numbers, or phrases that can be identified by the speech dialog system.

In addition, the speech dialog system also comprises a push-to-talk key, a user may use to manually activate the speech dialog system. Such a push-to-talk key can be mounted, in the example of a vehicle environment, at the steering wheel such that a user (the driver) can reach the push-to-talk key in a simple way. Upon activation (pressing) of the key, the speech dialog system is activated and enabled to receive a speech input. In order to reduce superfluous processing of the speech recognition unit, the speech dialog system may also comprise a voice activity detector so as to firstly process an input signal and detect whether actually voice activity is present. Only if this detection yields a positive result, the input signal is fed to the speech recognizer for further processing.

In the illustrated example, the speech dialog system 105 also has an output being connected to an input of the control device 104. In this way, it is possible to activate and/or deactivate the control device via corresponding speech commands. For example, a user may press the push-to-talk key and say the command "Activate control device" that is recognized by the speech dialog system which, then, sends a corresponding activation signal to the control device 104.

A device control unit 106 is also connected to the speech dialog system 105. This device control unit 106 is responsible for controlling devices as a function of speech commands entered to the speech dialog system. In particular, if the speech dialog system recognizes a speech command requiring, for example, to reduce the volume of the car radio, a corresponding signal is sent from the speech dialog system 105 to the device control 106 which, in turn, sends a corresponding control signal to the car radio.

In the illustrated example, the device control unit 106 is connected only to those devices that can provide an input signal for the control device 104. However, in other environments or situations, there may be additional devices not being connected to a control device 104 that, however, can also be controlled via speech commands. In this case, these devices would also be connected to the device control unit 106.

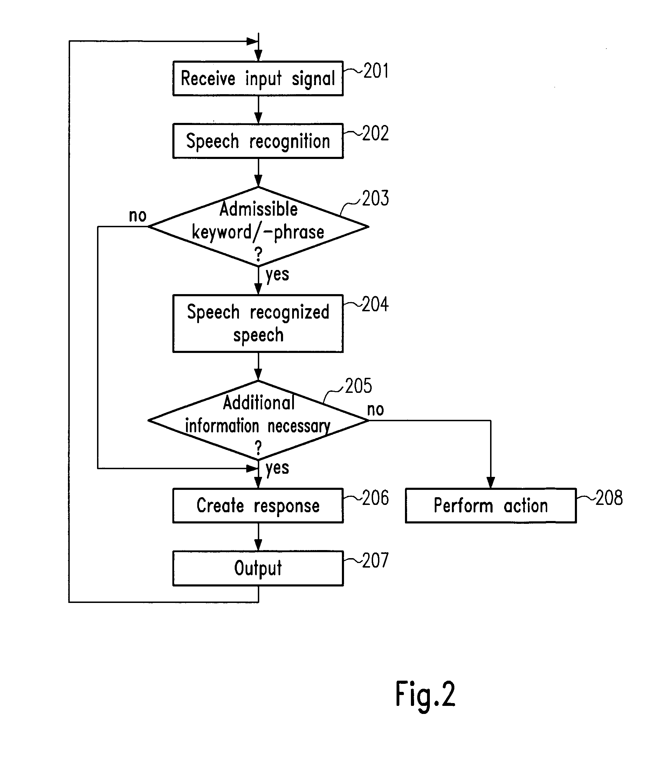

The flow chart in Fig. 2 illustrates the functioning of a speech dialog system, for example, as shown in Fig. 1. After being activated, the speech dialog system receives an input signal (step 201). The activation of the speech dialog system may have resulted from pressing a push-to-talk key which is the conventional way. Alternatively, in accordance with the invention, the speech dialog system could also have been activated by the control device of the speech dialog system.

In a further step 202, speech recognition is performed. It is to be understood that the speech recognition step can be preceded by steps performing a pre-processing of the input signal in order to improve the signal quality (e.g. the signal to noise ratio) and/or to detect voice activity. During speech recognition, the system tries to identify utterances being present in the input signal. This can be done in different ways as already explained above.

In the next step 203, it will be checked whether the recognized speech comprises an admissible keyword or key-phrase. In other words, the system has to determine not only whether it understands an utterance, but also whether the word or phrase makes any sense at this point. For example, if the speech dialog system using the described method is part of a system controlling board electronics in a vehicle such as a car radio, a navigation system and a mobile phone, when using this system, a user usually has to navigate through different menus. As an example, after having started the system, the user can possibly only choose between the three general alternatives "Car radio", "Navigation system", or "Mobile phone". Regarding other commands, the system does not know how to react. In other words, at this point, after having started the system, only these three terms might be admissible keywords or key-phrases respectively.

Having detected an admissible keyword, the system proceeds to the next step 204. In this step, the recognized speech is processed. In particular, the system determines what to do in response to the input. This can be achieved by comparing the recognized word with a list of stored words with associated rules.

Then, in step 205, it is to be decided whether the system requires additional information before actually performing an action such as controlling an additional device.

Referring to the above example, having recognized the term "Car radio", the system can simply switch on the car radio (if this was not already switched on), since in this case no other parameters are necessary. Therefore, the system proceeds to step 208 in which an action is performed depending on the recognized command.

However, if additional information is necessary (such as the name or frequency of another broadcast channel, for example) the system proceeds to step 206. As a further example, if the system has recognized the term "Mobile phone", it has to know what number to dial. Thus, in step 206, a corresponding response is created in order to obtain the required information. In the mentioned case, this could be the phrase "Which number would you like to dial?".

A response signal can be created in different ways. For example, a list of previously stored possible responses may be stored in the system. In this case, the system only has to choose the appropriate phrase for play-back. Alternatively, the system may also be equipped with a speech synthesizing means in order to synthesize a corresponding response.

Step 206 is followed by step 207 in which the response is actually output via a loudspeaker. After the output, the method returns to the beginning.

In step 203, it can also happen that no admissible key word is detected. In this case, the method directly proceeds to step 206 in order to create a corresponding response. For example, if a user has input the term "Air conditioning", but no air conditioning is actually present, and, thus, this term is not an admissible key word, the system may respond in different ways. It may be possible, for example, that although the term is not admissible, the system nevertheless has recognized the term and can create a response of the type "No air conditioning is available". Alternatively, if the system only detects that the utterance does not correspond to an admissible key word, a possible response could be, "Please repeat your command" or a kind of help output. Alternatively or additionally, the system can also list the key words admissible at this point to the user.

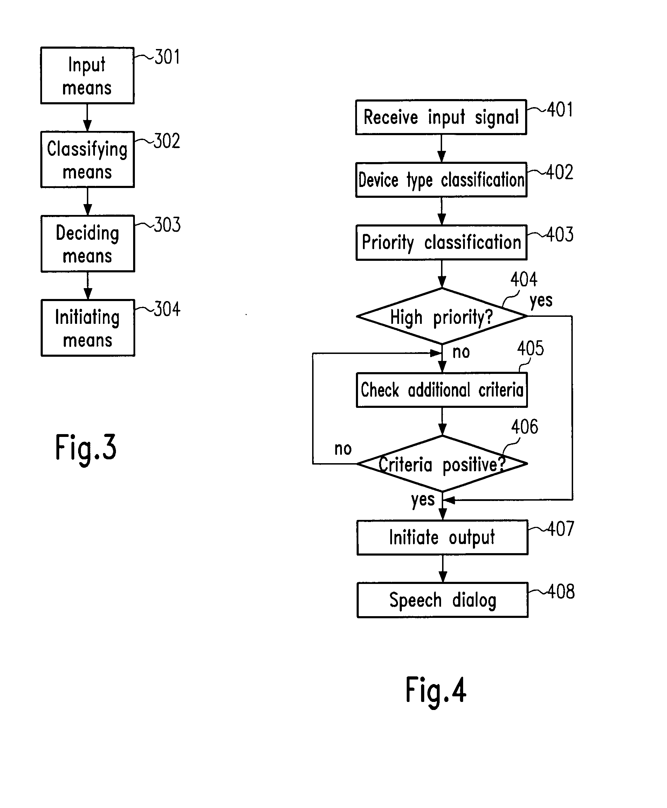

Fig 3 illustrates the structure of a control device for controlling a speech dialog system. First of all, the control device comprises an input means 301, this input means being configured to receive input signals from devices not being part of the speech dialog system such as from a car radio or a navigation system.

The input means 301 has an output being connected to an input of the classifying means 302. In the classifying means 302, a received input signal is classified according to one or different criteria. For example, the input signal can be classified according to the type of device (car radio, navigation system, or mobile phone) the input signal originated from. It is further possible to classify the input signals according to a priority scheme. This classification will be explained in more detail with reference to Fig 4. In order to ensure this functionality, the classifying means comprises a processing means and a memory for storing the relevant data the input signal is compared with in order to classify the signal. For example, different thresholds can be stored in a memory.

The classifying means 302 has an output being connected to an input of the deciding means 303. Different types of decisions can be made in deciding means 303. For example, it can be decided at what time outputting an output speech signal is to be initiated. The deciding means also comprises a processing means and a memory to store data for the deciding criteria.

The deciding means 303 has an output being connected to an input of the initiating means 304. The initiating means 304 is responsible for creating an initiating signal to be provided to the speech dialog system such that the speech dialog system outputs a corresponding output speech signal. Thus, the initiating means is to be configured so as to create different initiating signals comprising the necessary information to enable the speech dialog system to create a corresponding output speech signal. In particular, the initiating signal can comprise information on the type of device, the original input signal to the control device emanated from.

The flow diagram of Fig. 4 illustrates in more detail an example of the method for controlling a speech dialog system. First of all, the control device receives an input signal in step 401. This input signal originates from a device not being part of the speech dialog system such as a car radio or a mobile phone indicating that an event occurred.

In the next step 402, a first kind of classification of the input signal is performed. In this step, the input signal is classified according to the type of device (e.g. car radio, navigation system, or mobile phone) the input signal originated from. This classification is necessary to enable the speech dialog system, later on, to provide corresponding output speech signal in which a user is informed on the type of device and event as occurred.

In step 402, it is also possible to make a further classification if, for example, in one device different types of events can occur. For example, a mobile phone may receive an incoming call or an incoming SMS. In this case, the input signal would not only be classified according to the type of the device (mobile phone) but also according to the type of event that has occurred (incoming SMS, for example).

In the following step 403, a priority classification is performed. For example, each input signal can be classified into one of three classes, namely low priority, medium priority, high priority. Of course, other classes are possible as well. This classification can be based on different criteria. According to a first criterion, the input signal itself comprises the necessary information regarding priority. For example, an incoming E-mail can be marked as urgent or high priority E-mail. In such a case, the corresponding device (e.g. an E-mail browser) has to be configured in order to provide an input signal to the control device comprising this information. Then, in step 403, the input signal is automatically classified according to the high priority class.

Another criterion could be based on the rule that an incoming phone call always is to be classified as high priority. Then, if the control device receives an input signal from the mobile phone indicating that a call is incoming, this input signal is also classified as high priority. It is possible that a user may change these criteria or to store different scenarios each have different rules for the priority classification. For example, under some circumstances, a user might wish not to be disturbed by an E-mail during an ongoing telephone conversation. In this case, the user would have entered the rule that during a phone call, an incoming E-mail always has low priority.

In step 404, it is to be decided whether the input signal actually has high priority. The criterion according to which an input signal has high priority could be that the priority of the input signal falls within the specified priority class or is above a predetermined threshold value.

If the system detects that an input signal is a high priority signal, it proceeds directly to step 407. In this step, an initiating signal for the speech dialog system is created, thus, resulting in a corresponding speech output by a speech dialog system.

If the input signal is no high priority signal, the system proceeds to step 405. In this step, additional criteria are checked. For example, a criterion can be that during output of traffic information, an E-mail should not result in a speech output if it has low or medium priority. Another rule can concern the case that two input signals were received within a predetermined time interval (i.e. 0.5 s). In this case, the system has to be decided which of the two signals is to be output first. A corresponding rule can be based on a list of the possible events and corresponding input signals wherein the list is ordered according to the importance of the event.

If several criteria are checked in step 405, these different criteria are to be weighted such that the system can determine what to do if some of the criteria are fulfilled and others not. This can be achieved by feeding the results to a corresponding classification means.

In step 406, it is checked whether the criteria tested in step 405 gave a positive result. If not, the system may return to step 405 to check whether now the criteria are fulfilled. This return can be performed after a predetermined delay. Preferably, after a predetermined number or repetitions of step 405 are weighed with a negative result, the system decides to abort such that the input signal is not further processed.

However, if the criteria testing yielded a positive result, the method proceeds to step 407 in which an initiating signal is created and provided to the speech dialog system. The initiating signal has to comprise all necessary information to enable the speech dialog system to create a corresponding speech output. Thus, the initiating signal can comprise information on the type of device the input signal emanated from and, possibly, further details on the event.

The initiating signal may also be configured so as to activate the speech dialog system. This is particularly useful if, in principle, the speech dialog system can be inactive and is activated upon receipt of the initiating signal. This allows the possibility to start a speech dialog even without activating the speech dialog system manually, for example by pressing a push-to-talk key.

After the initiating step, the method proceeds as in the case of the standard speech dialog, i.e., it awaits a speech input from a user. In other words, in step 408, the method continues with a speech dialog as in the example illustrated in Fig. 2.

## Claims

1. Method for controlling a speech dialog system, comprising the steps of:
receiving an input signal emanating from a device not being part of the speech dialog system,
automatically classifying the input signal according to a predetermined criterion,
automatically initiating outputting an output speech signal by the speech dialog system depending on the classification of the input signal.

2. Method according to claim 1, wherein the speech dialog system is inactive when the input signal is received and the initiating step comprises activating the speech dialog system.

3. Method according to claim 1 or 2, further comprising the steps of receiving a speech input signal,
processing the speech input signal by a speech recognition unit, triggering a device not being part of the speech dialog system or outputting an output speech signal by the speech dialog system depending on the processed speech input signal.

4. Method according to one of the preceding claims, wherein the classifying step comprises classifying according to the device the input signal emanated from and/or according to the priority of the input signal.

5. Method according to one of the preceding claims, wherein the initiating step is preceded by deciding according to a further predetermined criterion at what time outputting the output speech signal is to be initiated.

6. Method according to claim 5, wherein the deciding step comprises deciding that the output speech signal is to be output immediately if the input signal was classified according to a priority above a predetermined threshold.

7. Method according to one claim 5 or 6, wherein the deciding step comprises deciding which output speech signal to output first if two input signals are received within a predetermined time interval.

8. Method according to one of the preceding claims, wherein the device not being part of the navigation system is a mobile phone, an internet browser, a car radio, an email browser, and/or a navigation system.

9. Computer program product directly loadable into an internal memory of a digital computer, comprising software code portions for performing the steps of the method according to one of the claims 1 to 8.

10. Computer program product stored on a medium readable by a computer system, comprising computer readable program means for causing a computer to perform the steps of the method according to one of the claims 1 to 8.

11. Device for controlling a speech dialog system, in particular, according to the method according to one of the claims 1 - 7, comprising:
input means for receiving an input signal emanating from a device not being part of the speech dialog system,
classifying means for automatically classifying the input signal according to a predetermined criterion,
initiating means for initiating outputting an output speech signal by the speech dialog system depending on the classification of the input signal.

12. Device according to claim 11, wherein the initiating means is configured to activate the speech dialog system if the speech dialog system is inactive.

13. Device according to claim 11 or 12, wherein the classifying means is configured to classify according to the device the input signal emanated from and/or according to the priority of the input signal.

14. Device according to one of the claims 11 - 13, further comprising deciding means to decide according to a further predetermined criterion at what time outputting the output speech signal is to be initiated.

15. Device according to one of the claims 11 - 14, the device being configured to be activated and/or deactivated via a speech command.

16. Device according to one of the claims 11 - 15, wherein input means is configured to receive an input signal from a mobile phone, an internet browser, a car radio, an email browser, and/or a navigation system.

17. Vehicle comprising a device according to one of the claims 11 -16.
